# FASCICULE DE BREVET EUROPEEN

(11) **EP 2 036 008 B1**
(45) Date de publication et mention de la délivrance du brevet: **01.04.2015**
(21) Numéro de dépôt: 07765323.6
(22) Date de dépôt: 05.06.2007
(51) Int. Cl.: G06K 19/077

(54) **PROCEDE DE FABRICATION DE CARTES COMPRENANT AU MOINS UN MODULE ELECTRONIQUE, ENSEMBLE INTERVENANT DANS CE PROCEDE ET PRODUIT INTERMEDIAIRE**
VERFAHREN ZUR HERSTELLUNG VON KARTEN MIT MINDESTENS EINEM ELEKTRONISCHEN MODUL, ANORDNUNG FÜR DIESES VERFAHREN UND ZWISCHENPRODUKT
METHOD OF FABRICATING CARDS COMPRISING AT LEAST ONE ELECTRONIC MODULE, ASSEMBLY INVOLVED IN THIS METHOD AND INTERMEDIATE PRODUCT

(30) Priorité: 19.06.2006 EP 06012550; 05.10.2006 WO PCT/EP2006/009663
(43) Date de publication de la demande: 18.03.2009
(73) Titulaire: Nagravision S.A., 1033 Cheseaux-sur-Lausanne (CH)
(72) Inventeur: DROZ, François, 2035 Corcelles (CH)
(74) Mandataire: Surmely, Gérard
(86) Numéro de dépôt international: PCT/EP2007/055530
(87) Numéro de publication internationale: WO 2007/147729

(56) Documents cités:
- US-A- 5 272 374
- US-A- 2005 019 989
- US-B1- 6 206 291
- HAGHIRI YAHYA ET AL: "Vom Plastik zur Chipkarte" VOM PLASTIK ZUR CHIPKARTE: WEGWEISER ZUM AUFBAU UND ZUR HERSTELLUNG VON CHIPKARTEN, XX, XX, 1999, pages 181-192, XP002364832

## Description

La présente invention concerne un procédé de fabrication de cartes comprenant chacune un module électronique, en particulier un module électronique comprenant un affichage électronique. La carte obtenue par le procédé selon l'invention est par exemple une carte du type bancaire, en particulier selon la norme ISO. Cependant, la présente invention peut s'appliquer également à des cartes électroniques ayant un profil général autre que rectangulaire, notamment circulaire. La présente invention concerne aussi des ensembles et des produits intermédiaires obtenus dans le cadre du procédé selon l'invention.

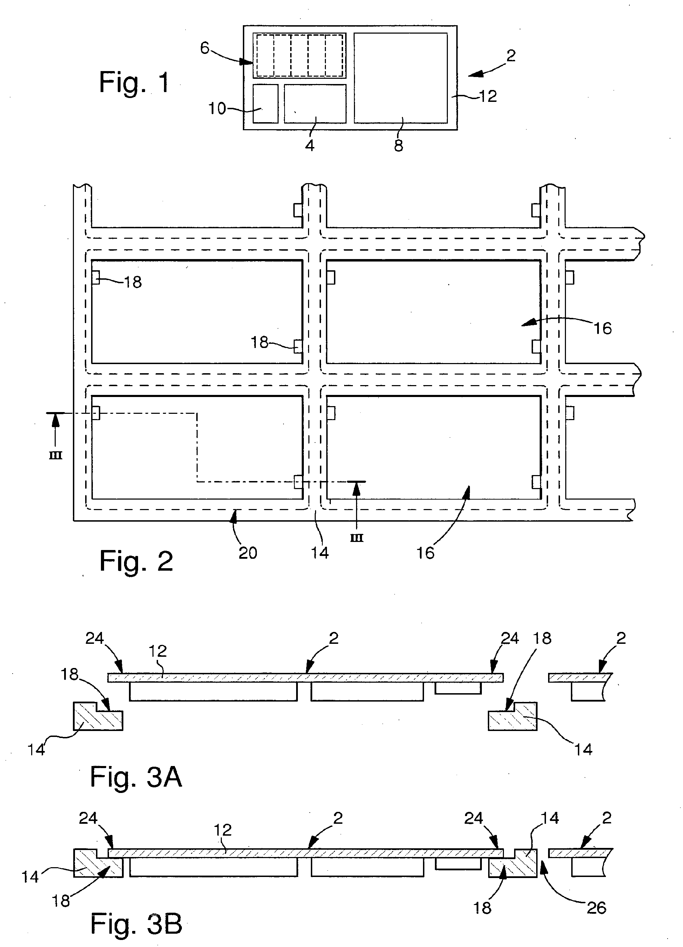

Les cartes électroniques ou cartes à circuit intégré ont passablement évolué ces dernières années. Initialement, les cartes électroniques étaient formées d'un corps de carte comprenant un module à contacts résistifs logé dans un évidement de ce corps de carte. Ensuite, des cartes sans contact ont été réalisées, c'est-à-dire des cartes comprenant un transpondeur formé d'un circuit électronique relié à une antenne. Avec l'évolution des cartes électroniques, on cherche à intégrer d'autres éléments électroniques permettant d'autres fonctions. A titre d'exemple, des cartes comprenant un interrupteur actionnable par l'utilisateur et un affichage électronique ont été divulguées. De telles cartes nécessitent généralement l'agencement de batteries aux dimensions relativement grandes ou des moyens d'alimentation du type cellule photovoltaïque. Pour intégrer ces divers éléments dans une carte, il est généralement prévu de les associer sous la forme d'au moins un module électronique comprenant un support à la surface duquel sont agencés divers éléments électroniques prévus. Un exemple schématique d'un tel module est représenté à la figure 1. Le module 2 comprend un circuit intégré 4 relié à un affichage électronique 6, une batterie 8 et un actionneur 10 agencés sur un support 12 formant un PCB d'interconnexion de ces divers éléments. Pour limiter l'épaisseur de ces modules, on peut prévoir notamment que la batterie et/ou l'affichage soient disposés en périphérie du support 12 ou dans des évidements de celui-ci.

L'intégration dans une carte d'un module électronique relativement encombrant et formé de divers éléments de forme et de dimensions variables n'est pas facilement réalisable. De plus, l'intégration notamment d'un affichage digital qui doit être positionné précisément dans la carte fabriquée, engendre un problème supplémentaire que se propose de résoudre la présente invention.

Le brevet EP 0 570 784 décrit dans un mode de mise en oeuvre donné un procédé de fabrication de cartes comprenant un ensemble électronique, en particulier un transpondeur qui est placé dans une ouverture principale d'un cadre de positionnement. Selon ce mode de mise en oeuvre décrit, le transpondeur et le cadre de positionnement sont noyés dans un liant pouvant être apporté sous forme de liquide visqueux, notamment une résine. Le cadre de positionnement dans ce document EP 0 570 784 sert uniquement à délimiter une zone interne pour le transpondeur, formé d'un circuit intégré et d'une bobine, à l'intérieur de la carte. Ainsi, lors de l'application d'une pression sur les divers éléments et le liant pour former une carte, le transpondeur est maintenu dans une zone interne alors que le liant dans un état non solide a la possibilité de s'étendre pour former une couche traversante de la carte fabriquée. L'homme du métier trouve dans ce document de brevet un procédé permettant d'intégrer dans une carte compacte et plane un module électronique relativement encombrant et de forme complexe. Cependant, le module électronique placé dans l'ouverture principale d'un cadre de positionnement tel que décrit dans ce document subira souvent un léger déplacement lors de la formation de la carte. En effet, ce document ne divulgue pas un maintien du transpondeur dans une position précise et déterminée à l'intérieur de l'ouverture du cadre de positionnement. L'homme du métier pourrait certes penser diminuer les dimensions de l'ouverture principale et les faire correspondre sensiblement aux dimensions du module électronique, en particulier au profil externe de ce module, comme proposé par exemple dans les documents US 5,272,374 et WO 03/044733. Toutefois, il est nécessaire de tenir compte des tolérances de fabrication de sorte qu'un ajustement trop serré est difficilement envisageable. De plus, selon la manière dont les modules électroniques sont fabriqués, le positionnement des divers éléments sur le support peut également varier un peu. Ainsi, par exemple, l'affichage digital 6 est agencé à la surface du PCB ou en périphérie de celui-ci dans une position pouvant varier quelque peu. Cependant, pour obtenir une carte de qualité, il est nécessaire de pouvoir positionner précisément cet affichage digital relativement au contour externe de la carte fabriquée. Ceci est particulièrement important lorsqu'il est prévu d'agencer une fenêtre transparente ajustée aux dimensions de l'affichage digital au-dessus de ce dernier pour permettre une lecture par un utilisateur de la carte.

A ce problème de positionnement du module électronique relativement au contour externe de la carte s'ajoute un autre problème lié à l'apport de ce module électronique au sein de l'installation de fabrication de cartes. On notera ici que la fabrication de cartes électroniques s'effectue généralement en lot, c'est-à-dire que plusieurs cartes sont fabriquées simultanément sous forme d'une plaque comprenant une pluralité de modules électroniques. Ensuite, chaque carte est séparée de la plaque obtenue par une étape de découpe, comme cela est décrit dans le document EP 0 570 784. Dans le cadre des modes de réalisations décrits dans cette dernière divulgation, le transpondeur demeure libre relativement au cadre de positionnement jusqu'à ce que la carte soit formée. Les documents US 5,272,374 et WO 03/044733 donnent un enseignement similaire. Ceci demande des précautions dans la manipulation des divers éléments apportés pour former la carte et la mise en place des modules électroniques est une étape délicate. De plus, il faut s'assurer que les modules électroniques demeurent dans les ouvertures correspondantes de la structure de positionnement jusqu'à ce que la presse soit activée et également lors de cette étape lorsqu'une résine est apportée pour enrober au moins partiellement les modules électroniques.

La présente invention se propose donc également de répondre à ce dernier problème de manière à simplifier l'apport des modules électroniques tout en garantissant un maintien de ces modules électroniques dans les ouvertures d'une structure de positionnement et de faciliter l'assemblage des divers éléments et matériaux prévus pour la fabrication des cartes.

A cet effet, la présente invention concerne premièrement un ensemble pour un procédé de fabrication de cartes dans lequel cet ensemble est premièrement apporté dans une installation où ensuite un matériau de remplissage ou une résine est apportée au moins d'un côté de cet ensemble de manière à former un produit intermédiaire ou au moins une carte, cet ensemble comprenant au moins un module électronique et une plaque ayant au moins une ouverture traversante dans laquelle ce module électronique est logé. Cet ensemble est caractérisé en ce que ledit module électronique est électriquement indépendant de cette plaque, en ce que chaque ouverture traversante est agencée relativement au module électronique situé dans cette ouverture traversante de manière à laisser un espace restant dans cette ouverture traversante pour recevoir le matériau de remplissage ou la résine, en ce que une fente est prévue entre chaque module électronique et la paroi de l'ouverture traversante correspondante pour recevoir le matériau de remplissage ou la résine, et en ce que la plaque et ledit au moins un module électronique sont assemblés par des moyens de fixation de manière que ledit au moins un module électronique demeure dans ladite au moins une ouverture traversante dans une position sensiblement déterminée relativement à la plaque, les moyens de fixation formant des jonctions ou des ponts, entre cette plaque et ledit au moins un module électronique, qui interrompent ou traversent la fente prévue entre chaque module électronique et l'ouverture traversante correspondante.

On remarquera que la résine peut être apportée sous différentes formes et dans divers états. Le terme 'résine' doit être compris dans un sens large, incluant les diverses colles connues, les résines PVC et Polyuréthane ou autres résines à disposition de l'homme du métier.

L'assemblage de la plaque ajourée et des modules électroniques dans une étape préliminaire du procédé de fabrication de cartes présente de nombreux avantages et répond au problème mentionné précédemment. Le fait de réaliser une liaison matérielle entre le module électronique et la plaque permet de manipuler cet ensemble en particulier par l'intermédiaire de la plaque pour la mise en oeuvre des étapes suivantes du procédé de fabrication de cartes. L'ensemble selon l'invention résout le problème du maintien des modules électroniques dans les ouvertures de la plaque lors de l'apport de la plaque et des modules électroniques dans une installation où une résine est apportée selon le procédé de fabrication de cartes ou produits intermédiaires de l'invention.

Dans le mode de réalisation préféré où un espace reste dans les ouvertures de la plaque ajourée suite à l'assemblage de l'ensemble selon l'invention, le remplissage des espaces restant dans les ouvertures par un matériau de remplissage ou une résine est généralement effectué avec l'application d'une pression, notamment à l'aide d'une presse ou d'un rouleau permettant d'étendre le matériau de remplissage ou la résine. Sans précaution particulière, cette étape peut déplacer les modules électroniques relativement au cadre. L'ensemble selon la présente invention résout ce problème avantageusement en permettant de conserver un positionnement précis tout au long du procédé de fabrication de cartes; ceci autant dans le plan général de la plaque que selon l'axe perpendiculaire à ce plan général.

La présente invention concerne également un produit intermédiaire pour une fabrication de cartes qui est formé par un ensemble selon l'invention et par un matériau de remplissage qui remplit au moins la majeure partie de l'espace restant dans les ouvertures de la plaque où sont situés les modules électroniques. De préférence, il est prévu que ce produit intermédiaire présente des surfaces inférieure et supérieure sensiblement planes. Dans une première variante, le produit intermédiaire présente sensiblement l'épaisseur de ladite plaque, le matériau de remplissage étant prévu essentiellement dans les espaces restants des ouvertures de la plaque. Dans une deuxième variante, il est prévu que le matériau de remplissage soit formé par une résine qui recouvre au moins l'une des faces inférieure et supérieure de la plaque. Dans ce dernier cas, le produit intermédiaire présente une meilleure rigidité par le fait que la résine recouvre la plaque au moins d'un côté, et de préférence des deux côtés.

Dans le cas où la plaque et les modules électroniques sont recouverts de part et d'autre par une résine, le produit intermédiaire peut déjà être utilisé en tant que carte lorsque les surfaces extérieures sont sensiblement planes. Toutefois, la réalisation d'un produit intermédiaire selon l'invention, dans un procédé de fabrication de cartes comprenant encore au moins une étape ultérieure d'apport de résine de part et d'autre de ce produit intermédiaire, présente plusieurs avantages. Selon ce procédé de fabrication d'au moins une carte, il est prévu de réaliser un produit intermédiaire tel que défini ci-dessus, puis de déposer de la résine au moins sur l'une des faces inférieure et supérieure de ce produit intermédiaire et finalement d'appliquer une pression sur cette résine déposée qui se trouve alors dans un état non solide pour former au moins une carte présentant une surface extérieure plane, la résine déposée sur le produit intermédiaire comblant les éventuelles variations d'épaisseur de ce produit intermédiaire. La résine déposée sur le produit intermédiaire forme une couche de préférence peu épaisse. Elle peut être apportée en une seule étape ou en plusieurs étapes successives pour améliorer encore la planéité.

Ce procédé est avantageux en particulier pour ce qui concerne l'obtention de cartes présentant une surface parfaitement plane et incorporant un module électronique de relativement grandes dimensions avec des variations d'épaisseur et formé de divers éléments. En effet, lorsque le module électronique est formé de différents éléments formés de divers matériaux et présentant des épaisseurs différentes ainsi que des zones intermédiaires vides, le matériau de remplissage ou la résine apportée dans l'espace restant de l'ouverture de la plaque présente une répartition non régulière, avec des variations d'épaisseur. Lors du durcissement du matériau de remplissage ou de la résine, un phénomène de retrait et donc de variation d'épaisseur de cette résine peut avoir lieu, ce qui engendre alors une surface qui présente de légers creux ou de légères bosses. L'état de surface du produit intermédiaire ne correspond généralement pas au standard d'une carte du type bancaire, mais les variations d'épaisseur peuvent être éliminées par le dépôt ultérieur d'un film de résine des deux côtés du produit intermédiaire lors de la formation de cartes terminées présentant alors des surfaces extérieures parfaitement planes.

De manière générale, l'invention concerne un procédé de fabrication d'au moins un produit intermédiaire ou d'au moins une carte comprenant les étapes suivantes :
- réalisation d'un ensemble selon le mode de réalisation préféré de l'invention décrit précédemment, cet ensemble comprenant une plaque présentant au moins une ouverture et au moins un module électronique agencé au moins partiellement dans cette ouverture, cette plaque et ledit au moins un module électronique étant assemblés, avant l'apport d'un matériau de remplissage dans l'espace restant de ladite au moins une ouverture, de manière suffisamment rigide pour maintenir ledit au moins un module électronique dans ladite au moins une ouverture, dans une position sensiblement fixe relativement à ladite plaque, avant et pendant l'étape suivante:
- apport d'un matériau de remplissage et introduction de ce matériau de remplissage dans un état liquide visqueux dans ledit espace restant de ladite au moins une ouverture;
- solidification du matériau de remplissage.

Selon une variante préférée, le procédé est caractérisé par le fait qu'une résine est déposée au moins sur l'une des faces inférieure et supérieure de ladite plaque, au moins du côté où le matériau de remplissage a été introduit dans ladite au moins une ouverture de cette plaque. Selon une variante préférée, le matériau de remplissage est identique à cette résine et est apporté simultanément.

Selon une caractéristique particulière du procédé décrit ci-avant, la résine est étendue à l'aide d'au moins un rouleau ou d'une lame ayant un mouvement relativement à l'ensemble plaque - module(s) électronique(s). On obtient ainsi un produit intermédiaire ou une carte présentant des surfaces externes sensiblement planes.

D'autres avantages et caractéristiques particulières de l'ensemble selon l'invention, du procédé de fabrication selon l'invention et du produit intermédiaire obtenu dans le cadre de ce procédé ressortiront également à la lecture de la description suivante de modes de réalisation dudit ensemble et dudit produit intermédiaire, ainsi que de modes de mise en oeuvre du procédé de fabrication de produits intermédiaires ou de cartes donnés à titre d'exemples nullement limitatifs, cette description étant faite en référence aux dessins illustratifs dans lesquels :
- la figure 1, déjà décrite, représente schématiquement un module électronique pouvant être intégré dans une carte obtenue par le procédé selon la présente invention;
- la figure 2 représente une plaque intervenant dans un premier mode de réalisation d'un ensemble selon la présente invention;
- la figure 3A représente l'apport d'un module électronique dans une ouverture de la plaque de la figure 2;
- la figure 3B montre en coupe partielle un premier mode de réalisation d'un ensemble selon l'invention;
- la figure 4 est une vue partielle de dessus du premier mode de réalisation d'un ensemble selon l'invention;
- les figures 5 et 6 représentent respectivement, de manière partielle, une première variante et une deuxième variante du premier mode de réalisation dudit ensemble;
- la figure 7A est une vue partielle de dessus d'une plaque intervenant dans une troisième variante dudit premier mode de réalisation dudit ensemble;
- la figure 7B est une vue partielle de dessus de ladite troisième variante du premier mode de réalisation dudit ensemble;
- la figure 8 représente partiellement une quatrième variante dudit premier mode de réalisation dudit ensemble;
- la figure 9 est une vue partielle de dessus d'un deuxième mode de réalisation d'un ensemble selon l'invention;
- la figure 10 est une vue partielle de dessus d'une variante dudit deuxième mode de réalisation dudit ensemble;
- la figure 11 est une vue partielle de dessus d'un troisième mode de réalisation d'un ensemble selon l'invention;
- la figure 12 est une vue partielle de dessus d'un quatrième mode de réalisation d'un ensemble selon l'invention;
- la figure 13 est une coupe partielle selon la ligne XIII - XIII de la figure 12;
- la figure 14 représente schématiquement une vue partielle de dessus d'une variante du quatrième mode de réalisation dudit ensemble;
- la figure 15 est une coupe partielle selon la ligne XV - XV de la figure 14;
- la figure 16 est une vue partielle en coupe d'un produit intermédiaire selon la présente invention et intervenant dans un procédé de fabrication de cartes selon la présente invention;
- la figure 17 est une vue partielle en coupe d'une variante de réalisation d'un produit intermédiaire selon l'invention;
- la figure 18 est une vue partielle en coupe d'une autre variante de réalisation d'un produit intermédiaire selon l'invention;
- la figure 19 est une vue partielle en coupe d'une carte obtenue selon un procédé de fabrication de l'invention à partir du produit intermédiaire représenté à la figure 17;
- la figure 20 montre schématiquement un autre mode de mise en oeuvre du procédé de fabrication de cartes selon l'invention, ce procédé pouvant également s'appliquer pour réaliser un produit intermédiaire selon la présente invention;
- la figure 21 est une vue partielle en coupe d'une pluralité de cartes résultant du procédé décrit à la figure 20; et
- la figure 22 représente schématiquement une variante de réalisation d'une pluralité de cartes ou de produits intermédiaires résultant également du procédé décrit à la figure 20.

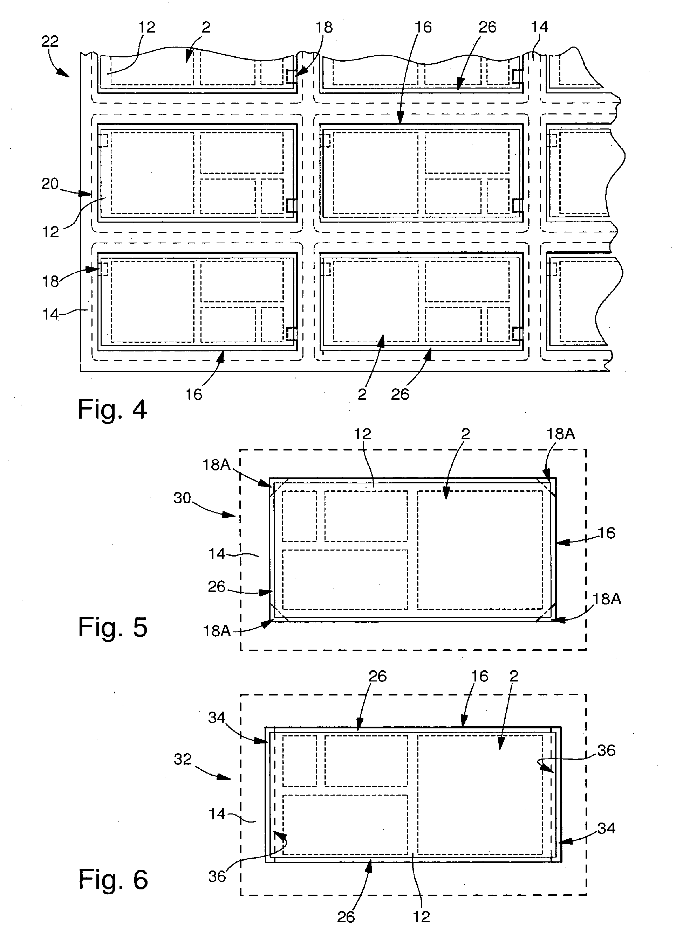

A l'aide des figures 2 à 4, on décrira ci-après un premier mode de réalisation d'un ensemble selon l'invention intervenant dans une fabrication de cartes également objet de la présente invention. Le procédé selon l'invention est particulièrement bien adapté à une production de cartes en lot, c'est-à-dire de plusieurs cartes fabriquées simultanément. L'ensemble 22 représenté partiellement à la figure 4 comprend plusieurs modules électroniques 2 pour la fabrication d'une pluralité de cartes en lot. Toutefois on notera que la présente invention n'est pas limitée à une telle fabrication de cartes en lot, mais peut également, dans une variante particulière, s'appliquer à une fabrication carte à carte, c'est-à-dire à une fabrication individuelle des cartes.

L'ensemble 22 comprend une plaque 14 ayant au moins une ouverture 16 au moins partiellement traversante et au moins un module électronique 2 logé au moins partiellement dans cette au moins une ouverture 16. Dans l'exemple représenté à la figure 2, la plaque 14 présente une pluralité d'ouvertures traversantes 16 et définit autant de cadres pour des modules électroniques 2 qu'il est prévu de loger respectivement dans ces ouvertures 16. La plaque définit une structure de positionnement pour les modules électroniques. Selon l'invention, des parties saillantes 18 sont agencées à la périphérie de chaque ouverture 16. Dans la variante représentée aux figures 2 à 4, il est prévu deux parties saillantes 18 agencées sur deux côtés opposés de l'ouverture 16, sensiblement selon une diagonale de cette ouverture. On notera toutefois que le nombre de parties saillantes peut être quelconque et qu'elles peuvent être agencées n'importe où le long du pourtour de chaque couverture 16. De préférence, il est prévu au moins deux parties saillantes dans chaque ouverture 16. Ces parties saillantes forment des butées pour les modules électroniques introduits dans les ouvertures.

Aux figures 2 et 4, on a représenté en trait interrompu 20 le pourtour final prévu pour chaque carte obtenue dans le cadre du procédé de fabrication selon l'invention où l'ensemble 22 intervient. De manière classique, chaque carte obtenue est découpée par des moyens connus de l'homme du métier. La figure 3A montre la plaque 14 selon le plan de coupe III - III de la figure 2. Les saillies 18 présentent une épaisseur ou hauteur inférieure à celle de la plaque 14. Les parties saillantes 18 sont formées avant l'apport du module électronique 2 de diverses manières. Elles peuvent être obtenues par écrasement à chaud ou à froid dans une presse. Elles peuvent également être obtenues à l'aide d'une tête à ultrason ou d'une tête générant un champ électrique à haute fréquence. Ceci permet de partir d'une plaque 14 d'épaisseur constante où les ouvertures 16 sont découpées avec des parties saillantes. Ensuite, l'épaisseur des parties saillantes est diminuée par un outil ou une tête agissant de manière localisée sur ces parties saillantes. Cette étape peut être effectuée de manière rapide et efficace en utilisant l'un des moyens mentionnés ci avant. Dans une autre variante de réalisation de la plaque 14, la diminution de l'épaisseur des parties saillantes 18 est effectuée par usinage, en particulier à l'aide d'une fraise. Dans une autre variante, la plaque 14 est formée de deux couches soudées ensemble par laminage, la couche inférieure comprenant les parties saillantes 18 alors que la couche supérieure présente des ouvertures rectangulaires correspondant aux ouvertures 16 sans les parties saillantes. Les parties saillantes 18 peuvent ainsi être réalisées par tous moyens connus de l'homme du métier.

Une fois la plaque 14 réalisée, il est prévu d'apporter dans chaque ouverture 16 un module électronique 2 électriquement indépendant de cette plaque. Le module électronique et toutes ses connexions électriques sont réalisés au préalable. Dans l'exemple décrit ici, le module 2 comprend un substrat 12 qui s'étend au moins dans certaines zones de son bord au-delà des éléments électroniques 4 à 8 qu'il supporte. Les dimensions et la forme du substrat 12 sont prévues de manière à présenter deux zones 24 qui se superposent aux deux parties saillantes 18 lors de l'introduction du module électronique 2 dans l'ouverture 16. Ainsi, le substrat 12 vient en appui contre les parties saillantes 18, comme cela est représenté à la figure 3B.

Selon l'invention, les modules électroniques 2 sont assemblés à la plaque 14 de manière suffisamment rigide premièrement pour que ces modules électroniques 2 demeurent dans les ouvertures 16 au cours du procédé de fabrication de cartes selon l'invention et deuxièmement pour qu'ils conservent sensiblement la position initiale définie lors de l'assemblage aux parties saillantes 18. Le positionnement du module électronique lors de son introduction dans l'ouverture 16 peut être notamment effectuée relativement à une référence définie sur la plaque 14. Ce positionnement du module 2 relativement à la plaque 14 peut concerner le module dans son ensemble et donc en particulier le substrat 12 ou alors concerner un élément particulier de ce module, notamment l'affichage électronique 6. Ceci est particulièrement avantageux étant donné que l'affichage 6 est par définition prévu visible à une surface de la carte finale. Un positionnement précis de l'affichage relativement au contour 20 prévu pour la carte est important pour des raisons esthétiques et également fonctionnelles lorsque l'affichage apparaît au travers d'une fenêtre d'une couche de recouvrement de la carte. Lorsque le positionnement est prévu relativement à l'affichage, des moyens sont prévus pour repérer l'affichage électronique 6 et ensuite introduire le module 2 de manière à ce que cet affichage 6 se trouve dans une position déterminée relativement à la plaque 14 qui définit une structure de positionnement.

La fixation du module électronique 2 aux parties saillantes 18 peut être réalisée de diverses manières. A titre d'exemple, pour autant que les matériaux constituant les deux zones 24 du substrat 12 et les parties saillantes 18 puissent adhérer directement l'un à l'autre, il est prévu simplement de souder à chaud à l'aide de thermodes ces zones 24 aux parties saillantes 18. L'assemblage du module 2 à la plaque 14 peut également être réalisé à l'aide de tête à ultrason ou autres moyens connus de l'homme du métier. Dans une autre variante, il est prévu de déposer un film de colle soit sur les parties saillantes 18, soit sur les zones 24 de manière à les coller ensemble. Dans d'autres variantes, la fixation du substrat 12 aux parties saillantes est effectuée par l'apport de gouttes de colle ou d'un cordon de colle entre le bord du substrat et les parties saillantes. Tous moyens chimiques ou physiques permettant d'assembler de manière suffisamment rigide le module 2 aux parties saillantes peuvent être utilisés dans le cadre de la présente invention.

On obtient ainsi un ensemble solidaire formé de la plaque 14 et de modules électroniques 2 logés dans les ouvertures 16 de cette plaque. On remarquera deux caractéristiques particulières et avantageuses de l'ensemble 22 :
- premièrement l'épaisseur du module 2 est sensiblement identique à l'épaisseur de la plaque 14, le module électronique 2 étant logé entièrement dans l'ouverture 16 correspondante;
- deuxièmement une fente 26 demeure entre le module 2 et le bord de l'ouverture 16 à l'exception des zones où se trouvent les parties saillantes 18.

Le fait que le module 2 est entièrement agencé à l'intérieur de l'ouverture 16, c'est-à-dire dans l'épaisseur de la plaque 14, permet de maîtriser au mieux une fabrication de cartes de relativement faible épaisseur; c'est-à-dire présentant une augmentation d'épaisseur la plus faible possible relativement à l'épaisseur du module 2. La présence d'une fente 26 permet de diminuer les tolérances de fabrication de la plaque ajourée 14 et des modules 2 et elle permet également de positionner le substrat 12 de manière légèrement différente d'une ouverture à l'autre en fonction notamment de la position de l'affichage électronique assemblé à ce substrat. De plus, comme cela ressortira par la suite, les fentes 26 peuvent ensuite être remplies par une résine qui assure ainsi un pont d'adhérence entre le substrat 12 et la paroi de l'ouverture traversante 16. Ceci permet d'assurer finalement une parfaite solidarité entre le module électronique 2 et la plaque 14 de sorte que lorsque la carte terminée subit des flexions ou autres contraintes, le module électronique 2 suit correctement la déformation de la plaque 14. Ceci évite notamment que les bords du substrat 12 du module 2 marquent les surfaces extérieures de la carte terminée et détériorent ainsi l'aspect esthétique de cette carte. On notera que le matériau utilisé en particulier pour réaliser le substrat 12 est sélectionné de manière à pouvoir subir une certaine déformation élastique et à permettre une certaine flexion du module électronique 2 lorsque la carte est mise sous contrainte, notamment dans le cadre de tests prévus pour répondre aux exigences des normes en la matière.

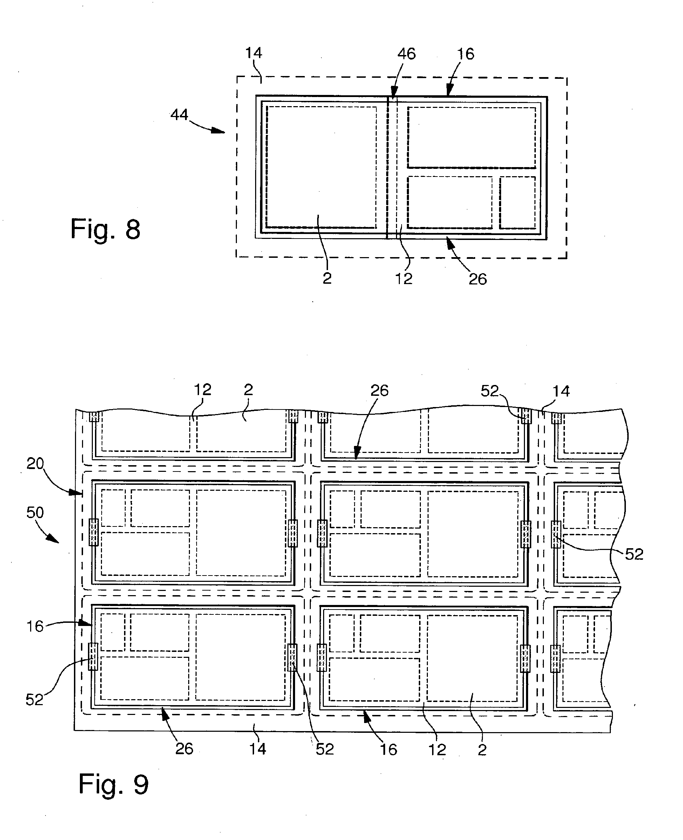

Une première variante de réalisation est représentée à la figure 5 où est représentée une seule ouverture 16 d'une plaque 14 correspondant ici sensiblement aux dimensions d'une seule carte. Cette représentation simplifiée, également utilisée aux figures 6 et 8, n'a aucun caractère limitatif et décrit un ensemble 30 similaire à l'ensemble 22 de la figure 4, c'est-à-dire pour la fabrication en lot d'une pluralité de cartes.

La variante de la figure 5 se distingue par le fait que les parties saillantes 18A sont formées dans les quatre angles de l'ouverture 16. Elles définissent ainsi dans la région inférieure de cette ouverture 16 des angles tronqués. Les parties saillantes 18A, ici relativement à une forme générale rectangulaire de l'ouverture 16, peuvent être réalisées par les mêmes techniques que celles évoquées précédemment. Les dimensions du module 2 sont prévues de telle manière que les quatre coins du substrat 12 sont superposés aux quatre parties 18A. L'assemblage du module électronique à la plaque 14 est réalisé de manière similaire à la variante décrite précédemment.

A la figure 6 est représentée une deuxième variante de réalisation de l'ensemble selon l'invention. Cette variante se caractérise par le fait qu'il est prévu le long de deux bords opposés de l'ouverture rectangulaire 16 d'agencer une marche 34 définissant un palier intermédiaire contre lequel deux zones latérales 36 du substrat 12 sont appuyées. La formation des marches 34 peut être effectuée de manière similaire aux parties saillantes décrites dans les autres variantes. L'assemblage du module électronique à la plaque 14 peut également être effectué par soudage ou collage ou encore par tous autres moyens physiques ou chimiques à disposition de l'homme du métier.

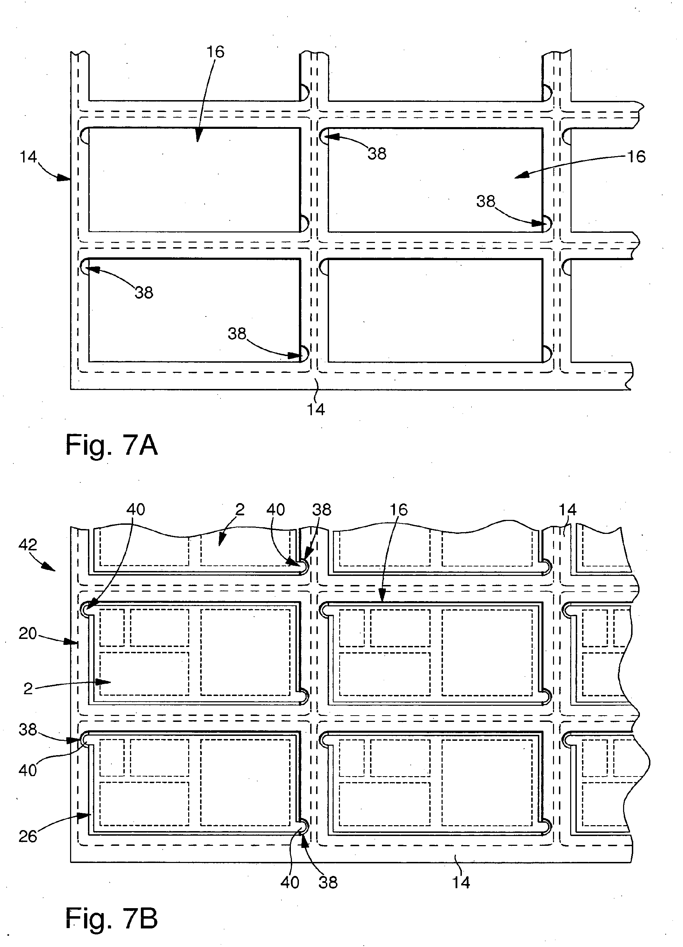

Aux figures 7A et 7B est représenté un ensemble selon une troisième variante du premier mode de réalisation. Le cadre 14 comprend une pluralité d'ouverture 16. Chaque couverture présente dans sa région périphérique au moins une encoche 38 ou de préférence au moins deux encoches 38. Chaque encoche définit une petite marche circulaire. Le module électronique 2 présente à son bord des zones saillantes 40 qui sont partiellement superposées aux encoches 38 lors de l'apport du module 2 dans l'ouverture 16. Ces zones saillantes 40 reposent ainsi sur les petites marches circulaires 38. L'assemblage du module 2 avec la plaque 14 se fait par l'intermédiaire des zones 40 qui sont soit soudées, soit collées dans les encoches 38. Dans une variante de réalisation particulière, les encoches sont dimensionnées de manière que les zones saillantes 40 doivent être enfoncées à force dans ces encoches, ce qui permet de fixer le module électronique 2 à la plaque 14. Cependant, cette dernière variante présente le désavantage de nécessiter des usinages très précis du substrat 12 et des encoches 38 dans la région périphérique de chaque ouverture 16. On notera que les première et troisième variantes peuvent être combinées, les parties saillantes 18 étant alors superposées aux zones saillantes 40.

Les diverses variantes décrites jusqu'ici du premier mode de réalisation d'un ensemble selon l'invention se caractérisent par le fait qu'il est prévu que des zones distinctes du bord du module électronique, en particulier de son substrat, soient superposées à des régions périphériques correspondantes de l'ouverture d'une plaque dans laquelle est logé ce module électronique, ces régions périphériques présentant de préférence une épaisseur inférieure à celle de la plaque ajourée. Selon l'invention ladite zone du bord et ladite région périphérique qui lui est superposée sont assemblées l'une à l'autre de manière à fixer le module électronique dans l'ouverture de la plaque. La zone du bord du module électronique peut être en appui directement contre la région périphérique correspondante ou être reliée à celle-ci par l'intermédiaire d'un film de résine. Des liaisons matérielles sont ainsi créées entre le module électronique et la plaque ajourée par l'intermédiaire de zones spécifiques du bord du module électronique situées en regard de régions périphériques correspondantes de l'ouverture dans laquelle le module électronique est agencé.

A la figure 8 est représentée une quatrième variante particulière du premier mode de réalisation d'un ensemble selon l'invention. L'ensemble 44 est formé par un cadre 14 comprenant au moins une ouverture 16 qui est séparée en deux ouvertures secondaires par une traverse 46 présentant une épaisseur inférieure à celle de la plaque 14. On peut parler d'une ouverture 16 présentant deux ouvertures secondaires ou de manière équivalente de deux ouvertures séparées par une traverse 46 relativement étroite. Le module électronique 2 est agencé de manière à ne pas avoir d'élément électronique dans une région centrale du substrat 12 qui est superposée à la traverse 46 une fois le module 2 introduit dans l'ouverture 16. L'assemblage du module 2 à la plaque 14 se fait par l'intermédiaire de la traverse 46 à laquelle le module 2 est par exemple soudé ou collé. D'autres moyens d'assemblage peuvent être prévus par l'homme du métier.

Dans toutes les variantes décrites du premier mode de réalisation d'un ensemble selon l'invention, la plaque 14 présente de préférence des régions périphériques aux ouvertures 16 qui ont une moindre épaisseur relativement à la plaque en général. On remarquera que d'autres variantes avec une plaque ayant une épaisseur constante peuvent être envisagées. Dans ce cas le substrat 12 est situé au-dessus de la plaque 14 avec les éléments électroniques dans l'ouverture 16.

A la figure 9 est représenté un deuxième mode de réalisation d'un ensemble 50 selon l'invention. Les références déjà décrites précédemment ne seront pas à nouveau toutes décrites ici en détail. Ce mode de réalisation se caractérise par le fait que l'assemblage du module électronique 2 à la plaque 14 est réalisé par l'intermédiaire de portions de ruban adhésif 52, en particulier deux portions. Dans ce mode de réalisation, le module électronique 2 entre intégralement dans l'ouverture correspondante 16 et ne présente aucune partie superposée à la plaque 14. Les portions de ruban adhésif 52 définissent des liaisons matérielles entre chaque module électronique et la plaque ajourée. Ces portions 52 peuvent être agencées d'un côté ou de l'autre du module électronique 2. Dans l'exemple de la figure 9, ces portions 52 sont prévues pour former un pont entre le substrat 12 du module 2 et la région périphérique de l'ouverture 16. Ces portions sont agencées du côté opposé aux éléments électroniques supportés par le substrat 12. Ceci représente un exemple nullement limitatif.

Ce deuxième mode de réalisation se caractérise de manière générale par l'agencement d'attaches formées par des éléments matériels distincts formant des ponts entre le bord des modules électronique et les régions périphériques correspondantes des ouvertures dans lesquelles sont logées ces modules électroniques. Par portion de ruban adhésif, il faut comprendre de manière générale une portion de ruban présentant une surface adhérente aussi bien à la plaque 14 qu'au substrat 12. L'adhérence doit suffire à maintenir l'élément électronique dans l'ouverture correspondante 16 lors de transports et manipulations de l'ensemble 50 et également lors des étapes du procédé de fabrication de cartes dans lequel cet ensemble 50 intervient comme élément constitutif des cartes fabriquées simultanément en lot.

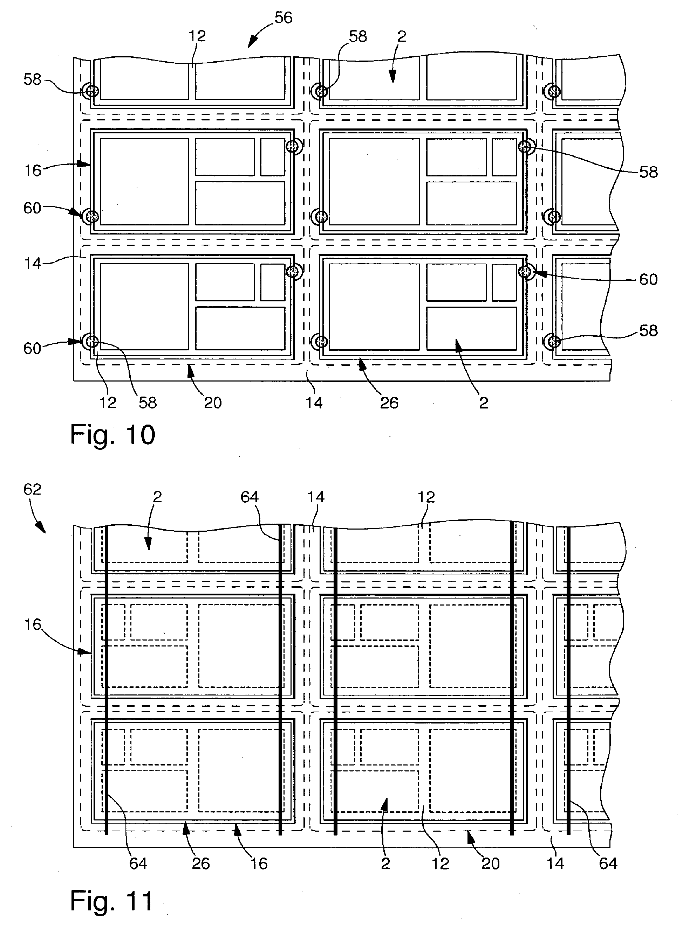

A la figure 10 est représentée une variante avantageuse du deuxième mode de réalisation d'un ensemble 56. La liaison matérielle ou pont entre le module électronique et la région périphérique de l'ouverture 16 de la plaque 14 est réalisé ici par des pastilles autocollantes 58. La région périphérique de chaque ouverture présente des encoches 60 définissant deux petites marches intermédiaires. Les parties des pastilles autocollantes 58 superposées à la plaque 14 sont agencées à l'intérieur de ces encoches 60 de manière à ne pas engendrer de surépaisseur relativement au cadre 14. Les encoches 60 peuvent présenter une profondeur relativement faible, au moins correspondant à l'épaisseur de la pastille 58, ou au contraire présenter une profondeur relativement grande mais inférieure à l'épaisseur du cadre 14. Les références déjà décrites précédemment ne sont pas toutes à nouveau décrites ici.

A la figure 11 est représentée un troisième mode de réalisation d'un ensemble selon l'invention. Cet ensemble 62 comprend également une plaque ajourée 14 et des modules électroniques 2 agencés dans les ouvertures 16. L'assemblage de ces modules 2 à la plaque 14 est réalisé ici par des fils thermocollants 64. Ces fils thermocollants 64 traversent la plaque 14 et en particulier les ouvertures 16. Chaque fil thermocollant 64 est agencé de manière à adhérer à la plaque 14 et aux modules 2 qu'il traverse. Dans l'exemple représenté à la figure 11, chaque module électronique 2 est maintenu dans l'ouverture 16 correspondante par deux fils 64 agencés à proximité de deux bords opposés du module. Le fil thermocollant 64 peut être un fil en matériau synthétique ou naturel imprégné ou recouvert de colle. Dans une autre variante, le fil lui-même est constitué par une résine solide, laquelle peut être rendue adhérente par un apport de chaleur ou par une illumination aux ultra-violets notamment. Bien évidemment, le fil 64 peut dans une autre variante être formé par un ruban adhésif traversant les ouvertures 16. Dans une autre variante, on peut prévoir des gorges dans la plaque 14 dans lesquelles passe les fils thermocollants entre deux ouvertures 16 adjacentes, ceci pour éviter que les fils engendrent une surépaisseur relativement à la plaque 14.

Les fils thermocollants 64 peuvent être apportés avant les modules électroniques ou après ceux-ci selon l'agencement prévu. De même, les fils thermocollants peuvent être prévus du côté du substrat 12 opposé aux éléments électroniques qu'il supporte, comme représenté à la figure 11, ou autrement être situé, relativement au substrat 12, du même côté que ces éléments électroniques. Le fil thermocollant peut adhérer soit au substrat 12 ou alors à certains éléments électroniques au dessus desquels il est agencé. L'homme du métier comprend ainsi que les variantes possibles sont nombreuses, l'assemblage ici étant prévu par un élément adhérent au module électronique et à la plaque 14 et traversant les espaces 16 depuis une région périphérique à une autre région périphérique de chaque ouverture 16. Les fils thermocollants ont été représentés à la figure 11 parallèles à un bord des ouvertures rectangulaires 16, mais on peut tout autant les agencer de manière oblique, en particulier selon une direction correspondant à une diagonale de ces ouvertures 16.

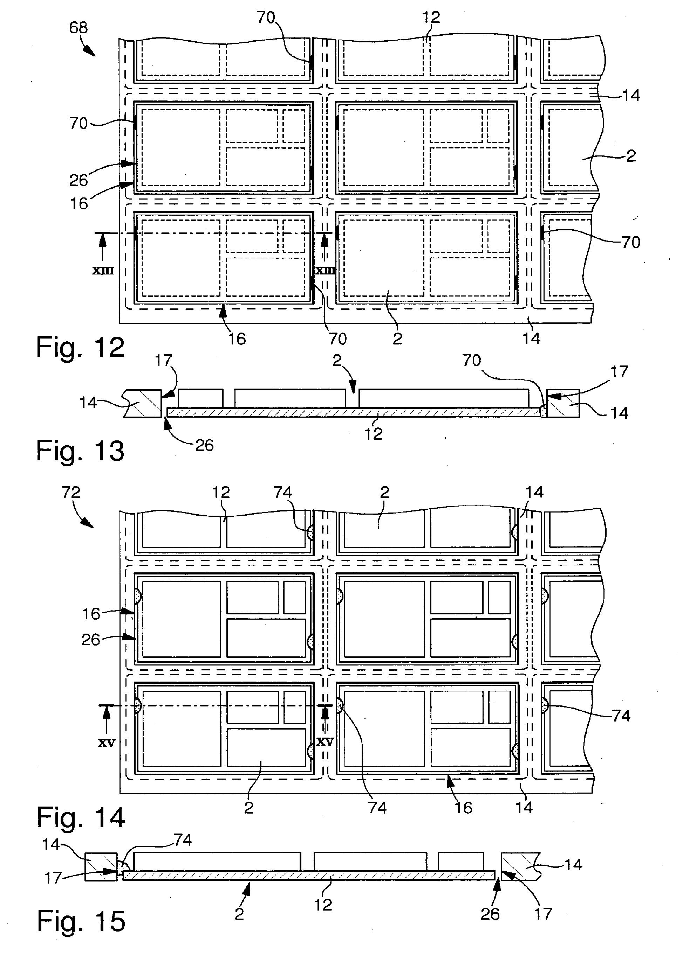

Aux figures 12 à 15 sont représentées deux variantes d'un quatrième mode de réalisation d'un ensemble selon l'invention. Les références déjà décrites précédemment ne seront pas à nouveau toutes décrites ici en détail. Ce quatrième mode de réalisation se distingue par le fait que l'assemblage des modules électroniques 2 à la plaque 14 est effectué par un apport de résine au niveau de la fente 26 prévu entre le module 2 et l'ouverture 16 correspondante. Dans la variante représentée aux figures 12 et 13, la colle est apportée par exemple à l'aide d'une seringue dans la fente 26 de sorte qu'un petit cordon de colle 70 forme un pont d'adhérence entre la paroi latérale 17 de l'ouverture 16 et la tranche du substrat 12 du module électronique. Ce cordon de colle peut être apporté une fois l'élément électronique placé dans l'ouverture correspondante de la plaque ou avant son apport. Dans ce dernier cas, un cordon de colle sera appliqué contre la paroi latérale 17 de l'ouverture 16. Le cordon de colle peut être apporté dans un état liquide visqueux ou dans un état pâteux, voire même solide et rendu mou ou visqueux par un apport de chaleur. Le cordon 70 peut être formé par n'importe quelle résine présentant une adhérence au cadre 14 et au module électronique, en particulier à son substrat 12, qui soit suffisante pour maintenir l'élément électronique dans l'ouverture correspondante et permettre ainsi une manipulation de l'ensemble 68 sans que les éléments électroniques ne sortent de leurs ouvertures respectives. La liaison matérielle réalisée au préalable entre le module électronique et la plaque 14 est importante pour maintenir cet élément électronique dans une position donnée lors des manipulations initiales et également lors des diverses étapes du procédé selon l'invention qui sera décrit par la suite.

La variante des figures 12 et 13 est caractérisée par le fait que le cordon de résine 70 définit un petit pont dans la fente 26, c'est-à-dire entre la tranche du substrat 12 et la surface latérale 17 de la plaque 14. Ceci n'exclut évidemment pas le fait que le cordon de résine 70 peut s'étendre également en partie sur l'une ou l'autre des surfaces inférieure ou supérieure du substrat 12 et également sur la face supérieure de la plaque 14. Toutefois, on notera que, de préférence, il est prévu que la résine de fixation du module soit entièrement dans l'ouverture 16 et n'engendre ainsi aucune surépaisseur relativement à la plaque.

La variante représentée aux figures 14 et 15 se distingue par le fait que l'ensemble 72 comprend des gouttes de résine pour solidariser les éléments électroniques 2 à la plaque 14. Ces gouttes 74 sont apportées de préférence du côté du substrat 12 où sont agencés les éléments électroniques. Les gouttes de résine 74 forment une jonction essentiellement entre la paroi latérale 17 de l'ouverture 16 et la surface supérieure du substrat 12. Ceci n'exclut toutefois pas que la goutte 74 coule dans la fente 26. Les deux variantes de ce quatrième mode de réalisation d'un ensemble selon l'invention sont donc relativement proches l'une de l'autre. Dans ce quatrième mode de réalisation, une résine est appliquée de manière locale pour créer un pont ou une jonction entre le module électronique et la région périphérique de l'ouverture correspondante. De préférence, ce pont ou cette jonction est situé à l'intérieur de l'ouverture 16 de sorte qu'elle n'engendre pas de surépaisseur relativement à l'épaisseur du cadre 14, laquelle est prévue sensiblement égale à l'épaisseur maximale du module électronique 2.

On notera que la résine peut être appliquée sur plusieurs zones distinctes du bord du module 2. Aux figures 12 et 14, la résine est déposée seulement dans deux zones diamétralement opposées. On peut évidemment prévoir plus de zones, notamment quatre sensiblement aux quatre angles de l'ouverture 16. On notera aussi que les zones distinctes peuvent être relativement courtes comme représentés aux figures 12 et 14 ou alors s'étendre sur une plus longue distance, par exemple le long des deux petits côtés de l'ouverture rectangulaire 16.

Dans tous les modes de réalisation de l'ensemble selon l'invention décrit précédemment, le module électronique peut présenter diverses configurations. Ce module électronique peut notamment avoir des éléments électroniques des deux côtés du substrat 12 de sorte que ce substrat 12 est situé dans la région médiane de l'ouverture correspondante. Certains éléments peuvent également être agencés dans des ouvertures du substrat 12 ou en périphérie de celui-ci, de manière à éviter que leurs épaisseurs respectives s'additionnent. Dans ce dernier cas, il est aussi possible qu'un élément électronique traverse le substrat et ressorte des deux côtés de celui-ci. De préférence l'épaisseur de la plaque 14 est prévue sensiblement identique à l'épaisseur du module électronique; mais ceci n'est pas une condition obligatoire. On peut ainsi prévoir que certains éléments, en particulier un affichage électronique, présentent une épaisseur supérieure à celle de la plaque 14. Finalement on notera que divers modes de réalisation et/ou diverses variantes peuvent être combinées entre elles.

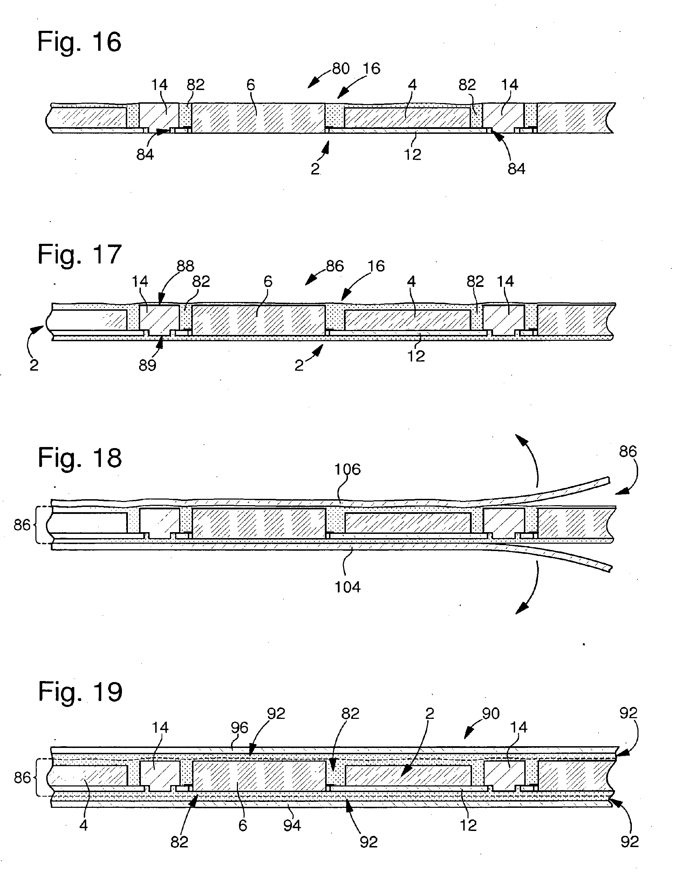

A l'aide des figures 16 et 17, on décrira ci-après deux variantes principales d'un produit intermédiaire intervenant dans la fabrication de cartes selon l'invention.

Le produit intermédiaire 80 représenté à la figure 16 est formé par un ensemble selon l'invention, cet ensemble comprenant une plaque ajourée 14 et des modules électroniques logés dans les ouvertures correspondantes 16. Le substrat 12 du module 2 repose en appui contre des parties saillantes agencées à la périphérie des ouvertures 16, comme cela a été décrit dans le cadre du premier mode de réalisation d'un ensemble selon l'invention. Initialement les modules électroniques 2 et la plaque ajourée 14 sont assemblés notamment par un film d'adhérence prévu entre les parties saillantes de la plaque 14 et les substrats 12 des modules électroniques. Dans une autre variante, la fixation des modules 2 à la plaque 14 est prévue par l'apport de gouttes de résine ou de cordons de résine, en particulier dans la fente restante entre le substrat 12 et la paroi 84. On notera qu'aux figures 16 et 17, l'exemple choisi pour l'ensemble selon l'invention est donné à titre illustratif et nullement limitatif. En effet, n'importe quel ensemble selon l'invention peut former un produit intermédiaire avec l'apport d'un matériau de remplissage 82 dans l'espace restant des ouvertures 16. Dans la variante de la figure 16 il est prévu que le matériau de remplissage 82 remplisse sensiblement chaque ouverture 16, sans toutefois recouvrir ni les faces inférieure et supérieure de la plaque 14, ni les faces de l'affichage électronique 6 présentant une épaisseur égale à celle de la plaque 14. Il est prévu que le matériau de remplissage 82 remplisse au moins la majeure partie de l'espace restant dans les ouvertures 16. Ce matériau de remplissage est apporté sous forme de liquide visqueux et introduit dans les ouvertures par divers moyens à disposition de l'homme du métier, notamment par coulage ou par toute autre technique connue de l'homme du métier. On notera en particulier qu'il est possible d'envisager l'introduction du matériau de remplissage 82 par une technique d'injection en venant appuyer le couvercle du moule sur la plaque 14, ce couvercle épargnant la surface supérieure de l'affichage électronique 6 lors de l'injection. Une variante est envisagée où l'affichage électronique 6 est également recouvert par le matériau de remplissage qui est alors prévu transparent. Encore une fois, les exemples donnés sont nullement limitatifs. Dans la variante de la figure 16, le matériau de remplissage est apporté entièrement par la face supérieure du cadre 14, c'est-à-dire du côté opposé au substrat 12 du module électronique 2.

Le matériau de remplissage 82 peut être formé par divers matériaux appropriés présentant de préférence une certaine élasticité une fois solidifié. De préférence, il est prévu que le matériau de remplissage 82 présente une bonne adhérence avec les parois latérales des ouvertures 16. En particulier, le matériau 82 est constitué par une résine synthétique ou naturelle. A titre d'exemple, le matériau 82 peut être une résine polyuréthane ou une résine PVC. Ce matériau 82 peut également être constitué par une colle durcissant à température ambiante ou réagissant par exemple à une illumination aux ultraviolets (UV). Dans une autre variante envisageable, le matériau 82 peut être formé par un gel ou un matériau à base de silicone.

Le produit intermédiaire 86 représenté à la figure 17 se distingue de celui de la figure 16 par le fait que le matériau de remplissage 82 est formé par une résine qui recouvre au moins la face supérieure 88 de la plaque 14, c'est-à-dire la face du côté de laquelle la résine 82 a été introduite. Dans l'exemple de la figure 17, la résine 82 recouvre également la face inférieure 89 de la plaque 14 ainsi que le module 2, en particulier le substrat 12. Dans une autre variante, la plaque 14 et les modules électroniques sont posés sur un plan de travail ou une feuille de travail comme dans le cas de la figure 16, et la résine est introduite seulement par-dessus dans l'espace restant des ouvertures 16. Dans ce cas, seule la face supérieure 88 de la plaque 14 et la face supérieure de l'affichage 6 seront recouvertes. Dans le cas où l'affichage électronique 6 est recouvert par la résine 82, on prévoira évidemment que cette résine 82 soit suffisamment transparente pour permettre une lecture de cet affichage. Comme dans l'exemple de la figure 16, le circuit électronique 4 est recouvert par la résine 82.

Une fois la résine apportée et répartie dans les ouvertures 16, il est prévu une étape de solidification de cette résine pour former le produit intermédiaire. Dans l'exemple de la figure 17, l'ensemble selon l'invention est enrobé par la résine 82. Par contre dans l'exemple de la figure 16, la résine 82 ne définit pas une couche traversante mais est localisée essentiellement dans les ouvertures 16 de la plaque 14. Aux figures 16 et 17, la surface supérieure de la résine solidifiée présente une certaine ondulation, c'est-à-dire de légères variations d'épaisseur. Ceci ne veut pas dire que la résine a été apportée seulement par une technique de coulage mais peut indiquer que, lors de la solidification de la résine ou du matériau de remplissage, des phénomènes de retrait de matière peuvent avoir lieu de manière non homogène étant donné la présence d'éléments électroniques relativement encombrants et formés de divers matériaux. Ainsi la surface non plane du produit intermédiaire 86 peut également résulter d'un procédé où la résine est étendue à l'aide d'un rouleau ou d'une lame et même dans le cas où la résine est injectée ou étendue dans une presse à surfaces planes. Le produit intermédiaire 86 peut déjà permettre de constituer une carte ou un jeton électronique après découpage, mais son état de surface peut être amélioré dans le cadre d'un procédé selon l'invention qui sera décrit par la suite.

A la figure 18 est représentée une variante de réalisation du produit intermédiaire. Cette variante se caractérise par le fait qu'il est prévu en outre deux feuilles de travail de part et d'autre de l'ensemble selon l'invention, c'est-à-dire recouvrant les faces inférieure et supérieure de la couche de résine. Ces feuilles de travail 104 et 106 présentent donc une faible adhérence à la résine 82 et facilitent la fabrication du produit intermédiaire. En effet, la résine n'est ainsi pas mise en contact avec les surfaces de l'installation de fabrication des produits intermédiaires selon l'invention. Les feuilles de travail sont enlevées une fois la résine solidifiée. Dans une autre variante il est prévu un film plastique mince de chaque côté de la résine qui adhère solidement à cette résine. Ce film demeure dans les cartes fabriquées selon le procédé décrit ci-après.

En référence à la figure 19, on décrira ci-après un procédé de fabrication d'au moins une carte selon l'invention. Les étapes de ce procédé comprennent :
- la réalisation d'un produit intermédiaire selon l'invention, par exemple le produit intermédiaire 80 de la figure 16 ou le produit intermédiaire 86 de la figure 17;
- le dépôt d'une résine au moins sur l'une des faces inférieure et supérieure de ce produit intermédiaire;
- l'application d'une pression sur la résine déposée sur le produit intermédiaire pour l'étendre et niveler ladite face inférieure ou/et ladite face supérieure de ce produit intermédiaire, cette résine étant alors dans un état non solide et de préférence liquide visqueux pour pouvoir compenser les éventuelles variations d'épaisseur du produit intermédiaire.

A la figure 19 est représentée une pluralité de cartes fabriquées en lot selon le procédé de fabrication décrit ci-dessus. Après avoir réaliser un produit intermédiaire 86, deux couches de résine 92 ont été apportées de part et d'autre du produit intermédiaire 86, ainsi que deux couches solides externes 94 et 96. A l'aide d'une presse, une pression est appliquée contre les couches externes 94 et 96 de manière à former une pluralité de cartes 90. Les références déjà décrites précédemment ne sont pas de nouveau décrites ici en détail. Dans le cas où le produit intermédiaire comprend deux films plastiques externes, la résine est alors déposée dessus et ces films sont recouverts de résine des deux côtés.

Concernant l'apport de la résine 92 de part et d'autre du produit intermédiaire 86, on remarquera qu'il y a diverses variantes possibles. Une première variante principale consiste à apporter la résine dans un état liquide visqueux avant ou simultanément aux couches externes 94 et 96. La formation de la carte selon l'invention peut être effectuée par exemple dans une presse à surfaces planes dans laquelle les divers éléments sont apportés ou à l'aide de rouleaux presseurs connus de l'homme du métier. La résine 92 peut être identique au matériau de remplissage ou à la résine 82 utilisée pour former le produit intermédiaire. Cependant, on peut très bien prévoir la sélection d'une résine différente pour les couches 92 et bien adaptée à l'application en couches minces. De plus, on choisira de préférence une résine 92 particulièrement stable et ne présentant pas de retrait significatif lors de la solidification de cette résine.

Comme cela ressort à la figure 19, le produit intermédiaire 86 présente une surface supérieure légèrement ondulée. La résine 92 est répartie lors de l'application de la pression de manière à combler ces ondulations du produit intermédiaire pour former une carte ou une pluralité de cartes 90 dont les couches externes 94 et 96 présentent alors une surface parfaitement plane. Cette fabrication en deux étapes au niveau de l'apport de matériau de remplissage ou de résine permet d'obtenir des cartes présentant une épaisseur donnée et de résoudre ainsi les problèmes de planéité rencontrés dans la fabrication de cartes ayant à l'intérieur des éléments ou modules électroniques de relativement grandes dimensions, en particulier des éléments électroniques présentant des épaisseurs variables qui engendrent des épaisseurs de résine également variables à l'intérieur de la carte. L'apport de résine sur le produit intermédiaire et l'application d'une pression dessus peuvent être effectués en plusieurs étapes successives. Ainsi, lors de la première application de résine, on utilise de préférence deux feuilles de travail qui sont enlevées après solidification des couches de résine 92, de manière à permettre d'appliquer une seconde couche de résine par dessus et d'améliorer encore la planéité de la carte. Comme déjà mentionné, on peut aussi prévoir une structure multicouche avec des films plastiques minces entre deux dépôts de résine en couche mince.

Selon une deuxième variante principale, les couches de résine 92 sont apportées sous forme de feuilles de résine solide qui sont ensuite fondues au moins partiellement avant ou simultanément à l'application de la pression pour former les cartes terminées. On rend ainsi les feuilles de résine suffisamment molles et déformables pour que la résine puisse se répartir de manière à combler les inégalités de surface du produit intermédiaire 86 pour former une carte plane de bonne qualité. L'apport de chaleur peut être réalisé par divers moyens et notamment au travers de la presse elle-même. Finalement, la solidification de la résine 92 peut être aussi effectuée de diverses manières, notamment en fonction des caractéristiques de cette résine. Elle peut se solidifier à température ambiante ou encore par d'autres moyens connus de l'homme du métier, notamment par réaction chimique ou par polymérisation dans le cadre de matériaux thermodurcissables.

On remarquera que la carte terminée 90 peut comprendre plusieurs couches extérieures et notamment des couches de protection transparentes servant par exemple à protéger une impression réalisée sur la couche 94 ou 96. De manière générale, tout produit intermédiaire et toute carte obtenue dans le cadre de la présente invention peuvent ensuite être laminés avec des couches plastiques en nombre variable sans apport additionnel de résine. Un produit intermédiaire ainsi laminé avec des couches externes peut former après découpage des cartes terminées.

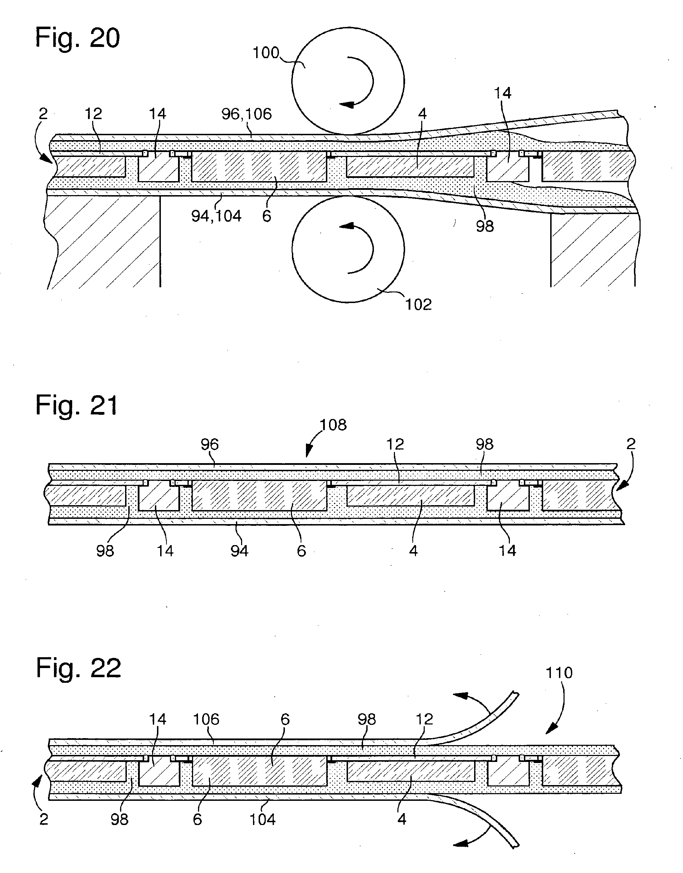

A l'aide des figures 20 à 22 on décrira un autre mode de mise en oeuvre du procédé de fabrication de cartes ou de produits intermédiaires selon l'invention. Dans ce mode de mise en oeuvre, on apporte un ensemble quelconque selon l'invention formé d'une plaque ajourée 14 et de modules électroniques comprenant notamment un affichage 6 et un circuit électronique 4 montés sur un substrat 12. Comme aux figures 16 et 17, l'affichage électronique est agencé dans une ouverture du substrat 12 ou en périphérie de celui-ci. Il est fixé à celui-ci par des pattes de connexion ou autres moyens de connexion ou de fixation. Cet ensemble selon l'invention est apporté avec une résine 98 dans un état liquide visqueux entre deux couches solides 94 et 96, respectivement 104 et 106 dans une installation pourvue de rouleaux presseurs 100 et 102 entre lesquels les divers éléments sont introduits en continu. De préférence, les rouleaux 100 et 102 tournent librement et l'ensemble formé des modules électroniques et de la plaque ajourée ainsi que les couches externes sont tirés. Ce mode de mise en oeuvre n'est pas limitatif mais présente l'avantage de permettre une avance identique entre l'ensemble selon l'invention et les couches extérieures en contact avec les rouleaux presseurs 100 et 102. La résine 98 est apportée de préférence sur la couche inférieure 94, respectivement 104 et sur l'ensemble selon l'invention. Ceci est nullement limitatif et tout autre apport permettant d'enrober correctement l'ensemble électronique peut être prévu par l'homme du métier. Les supports de l'installation ont été représentés de manière tout à fait schématique et ne forment pas une caractéristique particulière du procédé selon l'invention.

On notera que les rouleaux presseurs 100 et 102 ont été représentés de manière schématique ainsi que leur agencement dans l'installation de fabrication de cartes. Il est possible de prévoir plusieurs paires de rouleaux presseurs agencées l'une à la suite de l'autre ou d'autres moyens de pression similaires, par exemple une presse en continu équipée de tapis roulant. Ces paires de rouleaux peuvent présentées des diamètres différents et également un écartement différent entre les rouleaux d'une paire. En particulier, on peut prévoir une distance entre les rouleaux presseurs qui diminuent dans le sens d'avancement des éléments qui passent au travers des rouleaux presseurs. Ainsi on diminue progressivement l'épaisseur entre les couches externes 94 et 96, respectivement 104 et 106. Ceci peut permettre de mieux répartir la résine 98 et d'obtenir une meilleure planéité des cartes fabriquées.

D'autres moyens que des rouleaux presseurs peuvent être prévus, par exemple des lames pour étendre la résine apportée et la répartir dans les espaces restants des ouvertures de la plaque ajourée ainsi que de part et d'autre de l'ensemble selon l'invention.

A la figure 21 est représenté un lot de cartes obtenu par le procédé décrit ci-avant. Les cartes 108 comprennent ainsi un module électronique relié à une plaque ajourée 14 et enrobée de résine 98. Ces cartes comprennent deux couches externes solides 94 et 96 qui présentent des surfaces sensiblement planes. Ces couches 94 et 96 adhèrent correctement à la résine 98 de sorte qu'elles font partie des cartes terminées. De manière connue, chaque carte est découpée du lot de cartes fabriquées simultanément à l'aide d'un outil de découpe ou par des moyens connus de l'homme du métier, notamment à l'aide d'un jet de fluide.

A la figure 22 est représenté un produit intermédiaire ou un lot de cartes 110 obtenus par le procédé de fabrication décrit en référence à la figure 20. Ici, les couches solides 104 et 106 forment des feuilles de travail adhérant faiblement à la résine 98 de sorte que ces feuilles 104 et 106 sont enlevées après solidification de la résine 98. On obtient ainsi un produit intermédiaire ou un lot de cartes dont le corps est formé par la résine 98, les surfaces extérieures de cette résine définissant alors les faces extérieures du produit obtenu. Selon diverses variantes, d'autres couches extérieures peuvent être apportées ensuite par laminage de part et d'autre du produit intermédiaire 110. De même, les cartes 108 représentées à la figure 21 peuvent recevoir en outre d'autres couches externes, en particulier une couche d'impression et une couche de protection transparente finale. Le découpage des cartes individuelles peut être effectué avant ou après l'apport de ces couches additionnelles.

Dans un autre mode de mise en oeuvre du procédé décrit ici, la formation du produit intermédiaire ou des cartes peut être réalisée dans une presse présentant des surfaces planes, l'ensemble des éléments étant apporté entre ces surfaces avant qu'une pression soit exercée pour former des produits intermédiaires ou des cartes sensiblement planes. On notera qu'il est possible d'utiliser premièrement des rouleaux presseurs et ensuite de mettre le produit obtenu dans une presse à surface plane jusqu'à solidification de la résine. On remarquera finalement que la résine 98 est apportée de préférence dans un état liquide visqueux. Toutefois, dans une variante, il est possible d'apporter cette résine ou tout matériau de remplissage dans un état solide et de le fondre ensuite pour qu'il puisse alors remplir les espaces restant dans les ouvertures de la plaque ajourée 14 et former ainsi des cartes compactes et sensiblement pleines, c'est-à-dire présentant un air résiduel relativement faible.

## Revendications

1. Ensemble (22, 30, 32, 42, 44, 50, 56, 62, 68, 72) pour un procédé de fabrication de cartes dans lequel cet ensemble est premièrement apporté dans une installation où ensuite un matériau de remplissage ou une résine est apportée au moins d'un côté de cet ensemble de manière à former un produit intermédiaire ou au moins une carte, cet ensemble comprenant au moins un module électronique (2) et une plaque (14) ayant au moins une ouverture traversante (16) dans laquelle ce module électronique (2) est logé, cet ensemble étant **caractérisé en ce que** ledit module électronique (2) est électriquement indépendant de cette plaque (14), **en ce que** chaque ouverture traversante est agencée relativement au module électronique situé dans cette ouverture traversante de manière à laisser un espace restant dans cette ouverture traversante pour recevoir ledit matériau de remplissage ou ladite résine, **en ce que** une fente (26) est prévue entre chaque module électronique et la paroi (17) de l'ouverture traversante correspondante pour recevoir ledit matériau de remplissage ou ladite résine, et **en ce que** ladite plaque et ledit au moins un module électronique sont assemblés par des moyens de fixation (18, 18A, 34, 38+40, 46, 52, 58+60, 70, 74) de manière que ledit au moins un module électronique demeure dans ladite au moins une ouverture traversante dans une position sensiblement déterminée relativement à ladite plaque, lesdits moyens de fixation formant des jonctions ou des ponts, entre cette plaque et ledit au moins un module électronique, qui interrompent ou traversent ladite fente prévue entre chaque module électronique et l'ouverture traversante correspondante.

2. Ensemble (22, 30, 32) selon la revendication 1, **caractérisé en ce que** ladite plaque (14) présente à la périphérie de chaque ouverture traversante (16) au moins une partie saillante (18, 18A, 34) ayant une épaisseur inférieure à celle de ladite plaque et superposée à une zone du bord dudit module électronique agencé dans cette ouverture traversante, cette zone étant fixée à ladite partie saillante pour solidariser la plaque et le module électronique.

3. Ensemble (42) selon la revendication 1 ou 2, **caractérisé en ce que** chaque module électronique (2) présente au moins une zone saillante (40) qui est superposée à une région périphérique de l'ouverture traversante correspondante (16) de ladite plaque (14), cette zone saillante étant fixée à ladite région périphérique pour solidariser la plaque et le module électronique.

4. Ensemble (42) selon la revendication 3, **caractérisé en ce que** ladite région périphérique est définie par une encoche (38) réalisée à la périphérie de chaque ouverture traversante et définissant une marche intermédiaire dont l'épaisseur est inférieure à celle de la plaque (14).

5. Ensemble (44) selon la revendication 1, **caractérisé en ce que** chaque ouverture traversante est séparée en deux ouvertures secondaires par une traverse (46) de ladite plaque superposée au module électronique (2) agencé dans l'ouverture traversante, cette traverse étant fixée au module électronique pour solidariser ce dernier à la plaque.

6. Ensemble selon la revendication 5, **caractérisé en ce que** ladite traverse a une épaisseur inférieure à celle de ladite plaque.

7. Ensemble (50, 56, 62) selon la revendication 1, **caractérisé en ce que** chaque module électronique (2) est assemblé à ladite plaque par l'intermédiaire d'attaches adhésives.

8. Ensemble (50, 56) selon la revendication 7, **caractérisé en ce que** lesdites attaches adhésives sont formées par des bouts d'un ruban adhésif (52) ou des pastilles adhésives (58).

9. Ensemble (56) selon la revendication 8, **caractérisé en ce que** lesdites attaches adhésives sont fixées à ladite plaque dans des encoches (60) prévues à la périphérie de chaque ouverture (16).

10. Ensemble (62) selon la revendication 7, **caractérisé en ce que** lesdites attaches adhésives sont formées par des fils ou bandes thermocollants (64) qui traversent les ouvertures traversantes prévues dans ladite plaque et relient les modules électroniques (2) agencés dans ces ouvertures traversantes à ladite plaque.

11. Ensemble (68, 72) selon la revendication 1, **caractérisé en ce que** chaque module électronique (2) agencé dans une ouverture traversante de ladite plaque (14) est relié à cette dernière par l'intermédiaire de gouttes de résine ou de cordons de résine qui définissent des ponts matériels entre le module électronique et ladite plaque.

12. Ensemble selon l'une des revendications précédentes, **caractérisé en ce que** chaque module électronique (2) a un substrat (2) supportant des éléments électroniques, le module électronique étant assemblé à ladite plaque par l'intermédiaire de ce substrat.

13. Produit intermédiaire (80, 86) pour une fabrication de cartes, **caractérisé en ce qu'**il est formé par un ensemble selon l'une des revendications 1 à 12 et par une résine de remplissage (82) qui remplit au moins la majeure partie dudit espace restant dans ladite au moins une ouverture traversante dudit ensemble.

14. Produit intermédiaire selon la revendication 13, **caractérisée en ce que** ce produit intermédiaire présente des surfaces inférieure et supérieure sensiblement planes.

15. Produit intermédiaire (86) selon la revendication 13 ou 14, **caractérisé en ce qu'**il comprend une résine de recouvrement (82) recouvrant au moins l'une des faces inférieure et supérieure (89, 88) de ladite plaque (14).

16. Produit intermédiaire selon la revendication 15, **caractérisé en ce que** ladite résine de remplissage et ladite résine de recouvrement sont constituées d'une même substance.

17. Produit intermédiaire selon la revendication 15 ou 16, **caractérisé en ce qu'**au moins une couche solide (104, 106) recouvre ladite résine de recouvrement (82), cette couche solide formant une feuille de travail adhérant faiblement à cette résine de recouvrement et étant destinée à être enlevée au cours de ladite fabrication de cartes, de sorte que cette feuille de travail n'est pas comprise dans les cartes terminées.

18. Procédé de fabrication d'un produit intermédiaire ou d'au moins une carte comprenant les étapes suivantes :
- réalisation d'un ensemble selon l'une des revendications 1 à 12;
- apport d'une résine de remplissage (82, 98) et introduction de cette résine de remplissage dans un état liquide visqueux dans l'espace restant dans les ouvertures traversantes (16) de la plaque (14) dudit ensemble; et
- solidification de ladite résine de remplissage.

19. Procédé selon la revendication 18, **caractérisé en ce qu'**une résine de recouvrement (82, 98) est déposée au moins sur l'une des faces inférieure et supérieure de ladite plaque (14).

20. Procédé selon la revendication 19, **caractérisé en ce que** ladite résine de remplissage et ladite résine de recouvrement sont constitués par une même substance et sont apportés simultanément.

21. Procédé selon la revendication 19 ou 20, **caractérisé en ce qu'**au moins une couche solide (94, 96; 104, 106) est apportée contre ladite résine de recouvrement pour former une couche supérieure et/ou une couche inférieure.

22. Procédé selon la revendication 21, **caractérisé en ce que** ladite couche supérieure, respectivement ladite couche inférieure est une feuille de travail (104, 106) adhérant faiblement à ladite résine de recouvrement, cette feuille de travail étant enlevée par la suite.

23. Procédé selon la revendication 21, **caractérisé en ce que** ladite couche supérieure, respectivement ladite couche inférieure forme une couche des cartes fabriquées, cette couche solide adhérant fortement à ladite résine de recouvrement.

24. Procédé selon la revendication 18, **caractérisé en ce que** ladite résine de recouvrement est étendue à l'aide d'au moins un rouleau (100, 102) ou d'une lame qui présente un mouvement relativement audit ensemble de manière que la résine de recouvrement présente après durcissement une surface externe sensiblement plane.

25. Procédé selon l'une des revendications 19 à 23, **caractérisé en ce que** ladite résine de remplissage et ladite résine de recouvrement sont étendues à l'aide d'au moins un rouleau (100, 102) ou d'une lame qui présente un mouvement relativement audit ensemble de manière que ces résines présentent après durcissement une surface externe sensiblement plane.

## Patentansprüche

1. Anordnung (22, 30, 32, 42, 44, 50, 56, 62, 68, 72) für ein Verfahren für die Herstellung von Karten, in dem diese Anordnung zunächst in eine Anlage gebracht wird, in der anschließend ein Füllmaterial oder ein Harz wenigstens von einer Seite dieser Anordnung aufgebracht wird, um ein Zwischenprodukt oder wenigstens eine Karte zu bilden, wobei diese Anordnung wenigstens ein elektronisches Modul (2) und eine Platte (14), die wenigstens eine Durchgangs-öffnung (16) besitzt, in der dieses elektronische Modul (2) untergebracht ist, umfasst, wobei diese Anordnung **dadurch gekennzeichnet** ist, dass das elektronische Modul (2) von dieser Platte (14) elektrisch unabhängig ist, dass jede Durchgangsöffnung relativ zu dem elektronischen Modul, das sich in dieser Durchgangsöffnung befindet, in der Weise angeordnet ist, dass in dieser Durchgangsöffnung ein Zwischenraum verbleibt, um das Füllmaterial oder das Harz aufzunehmen, dass zwischen jedem elektronischen Modul und der Wand (17) der entsprechenden Durchgangsöffnung ein Schlitz (26) vorgesehen ist, um das Füllmaterial oder das Harz aufzunehmen, und dass die Platte und das wenigstens eine elektronische Modul durch Befestigungsmittel (18, 18A, 34, 38 + 40, 46, 52, 58 + 60, 70, 74) in der Weise zusammengefügt werden, dass das wenigstens eine elektronische Modul in der wenigstens einen Durchgangsöffnung in einer relativ zu der Platte im Wesentlichen bestimmten Position verbleibt, wobei die Befestigungsmittel Verbindungen oder Brücken zwischen dieser Platte und dem wenigstens einen elektronischen Modul bilden, die den Schlitz, der zwischen jedem elektronischen Modul und der entsprechenden Durchgangsöffnung vorgesehen ist, unterbrechen oder überqueren.

2. Anordnung (22, 30, 32) nach Anspruch 1, **dadurch gekennzeichnet, dass** die Platte (14) am Umfang jeder Durchgangsöffnung (16) wenigstens einen vorstehenden Teil (18, 18A, 34) aufweist, der eine Dicke besitzt, die kleiner als jene der Platte ist, und der einer Zone des Randes des elektronischen Moduls, das in dieser Durchgangsöffnung angeordnet ist, überlagert ist, wobei diese Zone an dem vorstehenden Teil befestigt ist, um die Platte und das elektronische Modul aneinander zu befestigen.

3. Anordnung (42) nach Anspruch 1 oder 2, **dadurch gekennzeichnet, dass** jedes elektronische Modul (2) wenigstens eine vorstehende Zone (40) aufweist, die einem Umfangsbereich der entsprechenden Durchgangsöffnung (16) der Platte (14) überlagert ist, wobei diese vorstehende Zone an dem Umfangsbereich befestigt ist, um die Platte und das elektronische Modul aneinander zu befestigen.

4. Anordnung (42) nach Anspruch 3, **dadurch gekennzeichnet, dass** der Umfangsbereich durch eine im Umfang jeder Durchgangsöffnung verwirklichte Kerbe (38) definiert ist, die eine Zwischenstufe definiert, deren Dicke kleiner als jene der Platte (14) ist.

5. Anordnung (44) nach Anspruch 1, **dadurch gekennzeichnet, dass** jede Durchgangsöffnung durch einen Steg (46) der Platte, der dem elektronischen Modul (2) überlagert ist, das in dieser Durchgangsöffnung angeordnet ist, in zwei sekundäre Öffnungen unterteilt ist, wobei dieser Steg an dem elektronischen Modul befestigt ist, um dieses an der Platte zu befestigen.

6. Anordnung nach Anspruch 5, **dadurch gekennzeichnet, dass** der Steg eine Dicke besitzt, die kleiner als jene der Platte ist.

7. Anordnung (50, 56, 62) nach Anspruch 1, **dadurch gekennzeichnet, dass** jedes elektronische Modul (2) mit der Platte über Klebstoffbefestigungen zusammengefügt wird.

8. Anordnung (50, 56) nach Anspruch 7, **dadurch gekennzeichnet, dass** die Klebstoffbefestigungen durch Enden eines Klebebandes (52) oder durch Klebstoffpastillen (58) gebildet sind.

9. Anordnung (56) nach Anspruch 8, **dadurch gekennzeichnet, dass** die Klebstoffbefestigungen an der Platte in den Kerben (60), die am Umfang jeder Öffnung (16) vorgesehen sind, befestigt sind.

10. Anordnung (62) nach Anspruch 7, **dadurch gekennzeichnet, dass** die Klebstoffbefestigungen durch wärmeklebende Fäden oder Bänder (64) gebildet sind, die durch die in der Platte vorgesehenen Durchgangsöffnungen verlaufen und die in diesen Durchgangsöffnungen angeordneten elektronischen Module (2) mit der Platte verbinden.

11. Anordnung (68, 72) nach Anspruch 1, **dadurch gekennzeichnet, dass** jedes in einer Durchgangsöffnung der Platte (14) angeordnete elektronische Modul (2) mit dieser Letzteren über Harztropfen oder Harzwulste, die Material-brücken zwischen dem elektronischen Modul und der Platte definieren, verbunden ist.

12. Anordnung nach einem der vorhergehenden Ansprüche, **dadurch gekennzeichnet, dass** jedes elektronische Modul (2) ein Substrat (2) besitzt, das elektronische Elemente trägt, wobei das elektronische Modul mit der Platte über dieses Substrat zusammengefügt wird.

13. Zwischenprodukt (80, 86) für die Herstellung von Karten, **dadurch gekennzeichnet, dass** es durch eine Anordnung nach einem der Ansprüche 1 bis 12 und durch ein Füllharz (82), das wenigstens den größten Teil des Zwischenraums füllt, der in der wenigstens einen Durchgangsöffnung der Anordnung verbleibt, gebildet ist.

14. Zwischenprodukt nach Anspruch 13, **dadurch gekennzeichnet, dass** dieses Zwischenprodukt im Wesentlichen ebene untere und obere Oberflächen aufweist.

15. Zwischenprodukt (86) nach Anspruch 13 oder 14, **dadurch gekennzeichnet, dass** es ein Abdeckharz (82) umfasst, das die untere Fläche und/oder die obere Fläche (89, 88) der Platte (14) abdeckt.

16. Zwischenprodukt nach Anspruch 15, **dadurch gekennzeichnet, dass** das Füllharz und das Abdeckharz aus derselben Substanz gebildet sind.

17. Zwischenprodukt nach Anspruch 15 oder 16, **dadurch gekennzeichnet, dass** wenigstens eine feste Schicht (104, 106) das Abdeckharz (82) abdeckt, wobei diese feste Schicht eine Arbeitsfolie bildet, die an diesem Abdeckharz schwach haftet und dazu bestimmt ist, während der Herstellung der Karten abgezogen zu werden, derart, dass diese Arbeitsfolie nicht in den fertig gestellten Karten enthalten ist.

18. Verfahren für die Herstellung eines Zwischenprodukts oder wenigstens einer Karte, das die folgenden Schritte umfasst:
- Verwirklichen einer Anordnung nach einem der Ansprüche 1 bis 12;
- Bereitstellen eines Füllharzes (82, 98) und Einleiten dieses Füllharzes in einem viskosen flüssigen Zustand in den in den Durchgangsöffnungen (16) der Platte (14) der Anordnung verbleibenden Raum; und
- Härten des Füllharzes.

19. Verfahren nach Anspruch 18, **dadurch gekennzeichnet, dass** ein Abdeckharz (82, 98) auf der unteren und/oder der oberen Fläche der Platte (14) abgelagert wird.

20. Verfahren nach Anspruch 19, **dadurch gekennzeichnet, dass** das Füllharz und das Abdeckharz durch die gleiche Substanz gebildet sind und gleichzeitig bereitgestellt werden.

21. Verfahren nach Anspruch 19 oder 20, **dadurch gekennzeichnet, dass** wenigstens eine feste Schicht (94, 96; 104, 106) an dem Abdeckharz angebracht wird, um eine obere Schicht und/oder eine untere Schicht zu bilden.

22. Verfahren nach Anspruch 21, **dadurch gekennzeichnet, dass** die obere Schicht bzw. die untere Schicht eine Arbeitsfolie (104, 106) ist, die an dem Abdeckharz schwach haftet, wobei diese Arbeitsfolie später abgezogen wird.

23. Verfahren nach Anspruch 21, **dadurch gekennzeichnet, dass** die obere Schicht bzw. die untere Schicht eine Schicht hergestellter Karten bildet, wobei diese feste Schicht an dem Abdeckharz stark haftet.

24. Verfahren nach Anspruch 18, **dadurch gekennzeichnet, dass** das Abdeckharz mit Hilfe wenigstens einer Rolle (100, 102) oder Klinge, die eine Bewegung relativ zu der Anordnung ausführt, ausgebreitet wird, derart, dass das Abdeckharz nach dem Härten eine im Wesentlichen ebene äußere Oberfläche aufweist.

25. Verfahren nach einem der Ansprüche 19 bis 23, **dadurch gekennzeichnet, dass** das Füllharz und das Abdeckharz mit Hilfe wenigstens einer Rolle (100, 102) oder Klinge, die eine Bewegung relativ zu der Anordnung ausführt, ausgebreitet werden, derart, dass diese Harze nach dem Härten eine im Wesentlichen ebene Oberfläche aufweisen.

## Claims

1. Assembly (22, 30, 32, 42, 44, 50, 56, 62, 68, 72) for a method of manufacturing cards wherein said assembly is first provided in an installation where a filler material or a resin is then provided on at least one side of said assembly so as to form an intermediate product or at least one card, said assembly including at least one electronic module (2) and one plate (14) having at least one through aperture (16) in which said electronic module (2) is housed, said assembly being **characterized in that** said electronic module (2) is electrically independent of said plate (14), **in that** each through aperture is arranged, relative to the electronic module situated in said through aperture, to leave a space remaining in said through aperture for receiving said filler material or said resin, **in that** a slot (26) is provided between each electronic module and the wall (17) of the corresponding through aperture for receiving said filler material or said resin, and **in that** said plate and said at least one electronic module are assembled by securing means (18, 18A, 34, 38+40, 46, 52, 58+60, 70, 74) so that said at least one electronic module remains in said at least one through aperture in a substantially determined position relative to said plate, said securing means forming junctions or bridges between said plate and said at least one electronic module, which interrupt or pass through said slot arranged between each electronic module and the corresponding through aperture.

2. Assembly (22, 30, 32) according to claim 1, **characterized in that**, at the periphery of each through aperture (16), said plate (14) has at least one projecting portion (18, 18A, 34), which has a smaller thickness than that of said plate and is superposed on an edge zone of said electronic module, which is arranged in said through aperture, said zone being secured to said projecting portion in order to secure the electronic module to the plate.

3. Assembly (42) method according to claim 1 or 2, **characterized in that** each electronic module (2) has at least one projecting zone (40), which is superposed on a peripheral area of the corresponding through aperture (16) in said plate (14), said projecting zone being bound to said peripheral area to secure the electronic module to the plate.

4. Assembly (42) according to claim 3, **characterized in that** said peripheral area is defined by a notch (38), which is made at the periphery of each through aperture, and which defines an intermediate step whose thickness is less than that of the plate (14).

5. Assembly (44) according to claim 1, **characterized in that** each through aperture is separated into two secondary apertures by a cross-beam (46) of said plate, which is superposed on the electronic module (2) arranged in the through aperture, said cross-beam being secured to the electronic module to fix said electronic module to the plate.

6. Assembly according to claim 5, **characterized in that** the thickness of said cross-beam is less than that of said plate.

7. Assembly (50, 56, 62) according to claim 1, **characterized in that** each electronic module (2) is assembled to said plate by adhesive fasteners.

8. Assembly (50, 56) according to claim 7, **characterized in that** said adhesive fasteners are formed by pieces of an adhesive strip (52) or adhesive discs (58).

9. Assembly (56) according to claim 8, **characterized in that** said adhesive attachments are secured to said plate in notches (60) provided at the periphery of each aperture (16).

10. Assembly (62) according to claim 7, **characterized in that** said adhesive attachments are formed by wires or thermoadhesive strips (64), which pass through the through apertures provided in said plate and connect the electronic modules (2) arranged in said through apertures to said plate.

11. Assembly (68, 72) according to claim 1, **characterized in that** each electronic module (2) arranged in a through aperture in said plate (14) is connected to said plate via drops of resin or strips of resin, which define material bridges between the electronic module and said plate.

12. Assembly according to any of the preceding claims, **characterized in that** each electronic module (2) has a substrate (12) that carries electronic elements, the electronic module being assembled to said plate via said substrate.

13. Intermediate product (80, 86) for a card manufacture, **characterized in that** it is formed by an assembly according to claims 1 to 12 and by a filling resin (82), which fills at least most of said remaining space in said at least one through aperture of said assembly.

14. Intermediate product according to claim 13, **characterized in that** this intermediate product has bottom and top faces which are substantially flat.

15. Intermediate product (86) according to claim 13 or 14, **characterized in that** it includes a covering resin (82) that covers at least one of the top and bottom surfaces (88, 89) of said plate (14).

16. Intermediate product according to claim 15, **characterized in that** said filling resin and said covering resin are formed by a same substance.

17. Intermediate product according to claim 15 or 16, **characterized in that** at least one solid layer (104, 106) covers said resin, said solid layer forming a worksheet that does not adhere well to said resin (82) and that will be removed during said card manufacture, such that said worksheet is not included in the finished cards.

18. Method of manufacturing an intermediate product or at least one card including the following steps:
- making an assembly according to any of the claims 1 to 12;
- adding a filling resin (82, 98) and introducing this filling resin in a viscous liquid state in the remaining spaces of the through apertures (16) in the plate (14) of said assembly, and
- solidifying said filling resin.

19. Method according to claim 18, **characterized in that** a covering resin (82, 98) is deposited over at least one of the top and bottom layers of said plate (14).

20. Method according to claim 19, **characterized in that** said filling resin and said covering resin are formed by a same substance and are added simultaneously.

21. Method according to claim 19 or 20, **characterized in that** at least one solid layer (94, 96; 104, 106) is added onto said covering resin to form a top layer and/or a bottom layer.

22. Method according to claim 21, **characterized in that** said top layer, respectively said bottom layer, is a worksheet (104, 106) that does not adhere well to said covering resin, said worksheet being subsequently removed.

23. Method according to claim 21, **characterized in that** said top layer, respectively said bottom layer, forms one layer of the manufactured cards, said solid layer adhering securely to said covering resin.

24. Method according to claim 18, **characterized in that** said filling resin is spread out using at least one roller (100, 102) or a blade, which moves relative to said assembly, such that, after hardening, the filing resin fully fills said remaining spaces of said apertures.

25. Method according to any of claims 19 to 23, **characterized in that** said filling resin and said covering resin are spread out using at least one roller (100, 102) or a blade, which moves relative to said assembly, such that, after hardening, the covering resin has an approximately flat external surface.
